# EUROPÄISCHE PATENTSCHRIFT

(11) **EP 2 110 012 B1**
(45) Veröffentlichungstag und Bekanntmachung des Hinweises auf die Patenterteilung: **14.03.2012**
(21) Anmeldenummer: 09150485.2
(22) Anmeldetag: 14.01.2009
(51) Int. Cl.: A01D 41/127

(54) **Verfahren und Vorrichtung zur Optimierung von Betriebsparametern einer landwirtschaftlichen Arbeitsmaschine**
Method and device for optimising operational parameters of an agricultural work machine
Procédé et dispositif d'optimisation de paramètres de fonctionnement d'une machine de travail agricole

(30) Priorität: 15.04.2008 DE 102008019018
(43) Veröffentlichungstag der Anmeldung: 21.10.2009
(73) Patentinhaber: CLAAS Selbstfahrende Erntemaschinen GmbH, 33428 Harsewinkel (DE)
(72) Erfinder: Meyer zu Helligen, Lars Peter, 32139 Spenge (DE); Nienaber, Gerhard, 59302 Oelde (DE); Kettelhoit, Boris, 33335 Gütersloh (DE)

(56) Entgegenhaltungen:
- EP-A- 1 403 799
- EP-A- 1 619 517
- EP-A- 1 847 169
- DE-A1-102004 048 083
- DE-A1-102005 031 426

## Beschreibung

Die Erfindung betrifft ein Verfahren und eine Vorrichtung zur Optimierung von Betriebsparametern einer landwirtschaftlichen Arbeitsmaschine nach den Oberbegriffen der Ansprüche 1 und 13.

Die Einstellung einer landwirtschaftlichen Arbeitsmaschine ist sehr komplex und weist eine Vielzahl von Maschinenkomponenten mit entsprechenden vom Bediener einstellbaren Betriebsparametern auf. Diese Betriebsparameter sind bei einem Mähdrescher zum Beispiel die Dreschtrommeldrehzahl, die Gebläsedrehzahl, die Siebweiten vom Unter- und Obersieb, die Haspeldrehzahl, die Fahrgeschwindigkeit etc..

Um die Qualität des Optimierungsprozesses der Betriebsparameter zu erhöhen, kann der Bediener neben seinem Erfahrungswissen auf Herstellerempfehlungen beziehungsweise vorwählbare Standardeinstellungen bei der Erstauslieferung der landwirtschaftlichen Arbeitsmaschine und auf sensorgenerierte Maschineninformationen zurückgreifen. Insbesondere bei der Änderung mehrerer Betriebsparameter hängt es aber auch hier maßgeblich vom Erfahrungswissen des Bedieners ab, ob er die eingetretene Wirkung dem richtigen Betriebsparameter zuordnet. Ein derartiges Vorgehen führt in der Praxis dazu, dass der Bediener sehr viele Maschineneinstellung testen muss, bevor er eine nach seinen Vorstellungen optimale Einstellung der Maschine erreicht hat, wobei die Zahl der Versuche um so höher sein wird, je unerfahrener der Bediener ist. Zudem hat der Bediener während dieser Betriebsparameteroptimierung eine Vielzahl von weiteren Informationen zu verarbeiten und erschwerend kommt hinzu, dass von Ernteeinsatz zu Ernteeinsatz jeweils unterschiedliche äußere Erntebedingungen vorliegen.

Die EP 1 619 517 A1 beschreibt ein Kommunikationssystem für mobile und stationäre Einrichtungen auf dem Gebiet der Landwirtschaft, welches die bestehenden Kommunikationseinrichtungen landwirtschaftlicher Arbeitsmaschinen nutzt, um über diese von einer zunächst zufälligen Kommunikation zwischen beliebigen Arbeitsmaschinen in eine zielgerichtete überzugehen, bei der landwirtschaftliche Arbeitsmaschinen gleichen Typs miteinander kommunizieren, um den Austausch respektive die Übertragung von Betriebsparametern vorzunehmen.

Die EP 1 403 799 A1 beschreibt den wechselseitigen Datenaustausch von Einstellparametern landwirtschaftlicher Erntemaschinen untereinander.

Aus der DE 10 2005 031 426 A1 ist eine Optimierungsmethode bekannt, bei dem jedem Betriebsparameter in einer Speichereinheit ein Optimierungskennfeld zugeordnet ist, welches in Teilkennfelder unterteilt wird und wobei die Optimierung in den Teilkennfeldern einzelnen landwirtschaftlichen Arbeitsmaschinen übertragen wird, welche beispielsweise in einem Maschinenverband arbeiten. Eine mit den landwirtschaftlichen Arbeitsmaschinen vernetzte zentrale Datenbank überwacht die Optimierung in den Teilkennfeldern und berechnet anhand der ermittelten Arbeitsergebnisse in den Teilkennfeldern einen statistisch optimalen Betriebsparameter, der dann an die landwirtschaftlichen Arbeitsmaschinen übermittelt wird. Durch eine derartige Optimierungsmethode verringert sich zwar der Zeitaufwand für den Bediener einer landwirtschaftlichen Arbeitsmaschine zur Optimierung von Betriebsparametern, jedoch hängt die Qualität der Optimierung in den einzelnen Teilkennfeldern immer noch wesentlich vom Erfahrungswissen des Bedieners ab, dem die Optimierung des jeweiligen Teilkennfeldes übertragen wird. Somit ist es nicht gewährleistet, dass in den jeweiligen Teilkennfeldern stets ein optimales Ergebnis und somit in Summe ein optimaler Betriebsparameter ermittelt werden kann.

Der Erfindung liegt deshalb die Aufgabe zugrunde, ein Verfahren und eine Vorrichtung zur Optimierung von Betriebsparametern einer landwirtschaftlichen Arbeitsmaschine vorzuschlagen, welche die beschriebenen Nachteile des Standes der Technik vermeidet sowie einen schnellen, sicheren und effizienten Optimierungsvorgang zur Findung von optimalen Betriebsparametern einer landwirtschaftlichen Arbeitsmaschine ermöglicht.

Erfindungsgemäß wird die Aufgabe durch ein Verfahren und eine Vorrichtung mit den kennzeichnenden Merkmalen der Ansprüche 1 und 13 gelöst.

Dadurch, dass dem Bediener der Arbeitsmaschine neben den eigenen Betriebsparametern und/oder den daraus resultierenden Arbeitsergebnissen zusätzlich Betriebsparameter und/oder daraus resultierende Arbeitsergebnisse zumindest einer weiteren mit der landwirtschaftlichen Arbeitsmaschine in einem Maschinenverband arbeitenden landwirtschaftlichen Arbeitsmaschine angezeigt werden, wird erfindungsgemäß ein Verfahren zur Optimierung von Betriebsparametern einer landwirtschaftlichen Arbeitsmaschine geschaffen, dass dazu dient, Betriebsparameter und/oder daraus resultierende Arbeitsergebnisse miteinander vergleichen zu können, so dass das Erfahrungswissen von mehreren Bedienern in den Optimierungsprozess eingebunden wird. Unerfahrenen Bedienern dient es dazu, von dem Erfahrungswissen von erfahrenen Bedienern zu lernen, und auch bei erfahrenen Bedienern kann die Vergleichsanzeige dazu dienen, dass er sein Erfahrungswissen noch weiter ausbauen kann. Insgesamt dient das erfindungsgemäße Optimierungsverfahren dazu, dass schnell, auf gesicherten Ergebnissen beruhende und den konkreten örtlichen und zeitlichen Erntebedingungen entsprechende Betriebsparameter generiert werden, die ein optimales Arbeitsergebnis der landwirtschaftlichen Arbeitsmaschine gewährleisten.

Unter einem Maschinenverband im Sinne der Anmeldung sind beispielsweise eine Mehrzahl von landwirtschaftlichen Arbeitsmaschinen zu verstehen, die unmittelbar an einem Ernteprozess beteiligt sind. Dies kann beispielsweise eine aus einer Erntemaschine und einer Anzahl von Transportfahrzeugen bestehende sogenannte Erntekette sein. Unter einem Maschinenverband sind beispielsweise aber auch mehrere gleichzeitig auf einem Feld arbeitende Erntemaschinen zu verstehen. Weiterhin könnten die landwirtschaftlichen Arbeitsmaschinen in dem Maschinenverband auch gleichzeitig auf einem Feld arbeitende Dünge-, Sä- und/oder Bodenbearbeitungsmaschinen sein. Die hier genannten landwirtschaftlichen Arbeitsmaschinen und deren Verwendung sind als beispielhafte Lösungen und nicht eingrenzend für eine Vielzahl von landwirtschaftlichen Arbeitsmaschinen und deren Verwendung in einem Maschinenverband zu sehen.

Um den Bediener nicht mit einer Vielzahl von Informationen zu überfordern, kann er erfindungsgemäß aus einer Mehrzahl von anzeigbaren Betriebsparametern und/oder daraus resultierenden Arbeitsergebnissen einzelne Betriebsparameter und/oder daraus resultierende Arbeitsergebnisse zur Anzeige auswählen. Somit kann er gemäß des gewünschten Arbeitszieles die Betriebsparameter und/oder daraus resultierende Arbeitsergebnisse auswählen, die in unmittelbarem Zusammenhang mit seinem Arbeitsziel stehen und sich auf einen Vergleich der wichtigen Betriebsparameter und/oder daraus resultierender Arbeitsergebnisse beschränken.

Bei einer vorteilhaften Weiterbildung des erfindungsgemäßen Optimierungsverfahrens werden dem Bediener der Arbeitsmaschine neben den eigenen Betriebsparametern und/oder den daraus resultierenden Arbeitsergebnissen und den Betriebsparametern und/oder den daraus resultierenden Arbeitsergebnissen der zumindest einen weiteren mit der landwirtschaftlichen Arbeitsmaschine in einem Maschinenverband arbeitenden iandwirtschaftüchen Arbeitsmaschine weitere arbeitsmaschinenabhängige Kriterien angezeigt. Dies können sowohl arbeitsmaschinenabhängige Kriterien der eigenen Arbeitsmaschine als auch einer anderen im Maschinenverband arbeitenden Arbeitsmaschine sein, so dass bei einem Vergleich der Betriebsparameter und/oder den daraus resultierenden Arbeitsergebnissen die arbeitsmaschinenabhängigen Kriterien mit berücksichtigt werden. Sind die landwirtschaftlichen Arbeitsmaschinen beispielsweise als Mähdrescher ausgebildet, so kann es vorkommen, dass sich ein Mähdrescher im Maschinenverband gerade in einem Abtankvorgang befindet, in dem er eine konstante Fahrgeschwindigkeit einhalten muss. Dies kann dazu führen, dass die eingestellten Betriebsparameter ein schlechteres Arbeitsergebnis erzeugen, als bei einem anderen im Maschinenverband arbeitenden Mähdrescher, dessen Fahrgeschwindigkeit mittels eines automatischen Vorfahrtreglers allein Erntegutdurchsatzabhängig gesteuert wird. Dadurch, dass dem Bediener somit angezeigt wird, dass eine Arbeitsmaschine Geschwindigkeitsabhängig und eine andere Arbeitsmaschine Erntegutdurchsatzabhängig gesteuert wird, kann er bei einem Vergleich der angezeigten Betriebsparameter und/oder der daraus resultierenden Arbeitsergebnisse den Schluss ziehen, die Betriebsparameter und/oder die daraus resultierenden Arbeitsergebnisse des derzeit im Abtankvorgang befindlichen Arbeitsmaschine aktuell nicht zu berücksichtigen.

Um die Optimierung der Betriebsparameter vorteilhaft vom bloßen Erfahrungswissen der Bediener zu entkoppeln und das Verfahren zur Findung von optimalen Betriebsparametern noch weiter zu beschleunigen, werden dem Bediener bei einer vorteilhaften Weiterbildung des erfindungsgemäßen Verfahrens in Abhängigkeit eines Vergleichs der Betriebsparameter und/oder der daraus resultierenden Arbeitsergebnisse mittels einer Steuereinheit generierte Optimierungshinweise im Bezug auf die Betriebsparameter angezeigt. Vorteilhaft betreffen die angezeigten Optimierungshinweise die Betriebsparameter der Arbeitsmaschine des Bedieners und/oder die Betriebsparameter zumindest einer im Maschinenverband arbeitenden Arbeitsmaschine, so dass der Bediener ein klares Bild darüber erhält, welche Betriebsparameter Optimierungsbedürftig sind, so dass sein Erfahrungswissen steigt. Bei einer weiteren vorteilhaften Ausgestaltung des erfindungsgemäßen Verfahrens kann der Bediener der Arbeitsmaschine die Optimierungshinweise an weitere im Maschinenverband arbeitende Arbeitsmaschinen Übermitteln, so dass es beispielsweise ausreicht, wenn lediglich eine der Arbeitsmaschinen im Maschinenverband über die Steuereinheit zum Generieren der Optimierungshinweise verfügt.

Der Bediener wird bei einer vorteilhaften Weiterbildung des erfindungsgemäßen Optimierungsverfahrens noch weiter dadurch entlastet, dass eine Steuereinheit der Arbeitsmaschine in Abhängigkeit eines Vergleichs der Betriebsparameter und/oder der daraus resultierenden Arbeitsergebnisse selbsttätig einzelne Betriebsparameter übernimmt, die bei einer im Maschinenverband arbeitenden Arbeitsmaschine ein besseres Arbeitsergebnis erzielt haben. Dabei kann der Vergleich sowohl seitens des Bedieners, als auch direkt von der Steuereinheit vorgenommen werden. Vorteilhaft kann der Bediener aus einer Mehrzahl von Betriebsparametern einzelne Betriebsparameter zur selbständigen Übernahme seitens der Steuereinheit auswählen, so dass er entscheiden kann, welche Betriebsparameter für das konkrete Arbeitsziel am Besten geeignet sind. Bei einer vorteilhaften Weiterbildung berücksichtigt die Steuereinheit bei dem Vergleich der Betriebsparameter und/oder der daraus resultierenden Arbeitsergebnisse und/oder der selbsttätigen Übernahme einzelner Betriebsparameter weitere arbeitsmaschinenabhängige Kriterien. Dies können sowohl arbeitsmaschinenabhängige Kriterien der eigenen Arbeitsmaschine als auch einer anderen im Maschinenverband arbeitenden Arbeitsmaschine sein, so dass bei einem Vergleich der Betriebsparameter und/oder den daraus resultierenden Arbeitsergebnissen die arbeitsmaschinenabhängigen Kriterien mit berücksichtigt werden. Sind die landwirtschaftlichen Arbeitsmaschinen beispielsweise als Mähdrescher ausgebildet, so kann es vorkommen, dass sich ein Mähdrescher im Maschinenverband gerade in einem Abtankvorgang befindet, in dem er eine konstante Fahrgeschwindigkeit einhalten muss. Dies kann dazu führen, dass die eingestellten Betriebsparameter ein schlechteres Arbeitsergebnis erzeugen, als bei einem anderen im Maschinenverband arbeitenden Mähdrescher, dessen Fahrgeschwindigkeit mittels eines automatischen Vorfahrtreglers allein Erntegutdurchsatzabhängig gesteuert wird. Dadurch, dass die Steuereinheit somit berücksichtigt, dass eine Arbeitsmaschine Geschwindigkeitsabhängige und eine andere Arbeitsmaschine Erntegutdurchsatzabhängig gesteuert wird, zieht sie beispielsweise bei einem Vergleich der angezeigten Betriebsparameter und/oder der daraus resultierenden Arbeitsergebnisse den Schluss, die Betriebsparameter und/oder die daraus resultierenden Arbeitsergebnisse des derzeit im Abtankvorgang befindlichen Arbeitsmaschine aktuell nicht zu berücksichtigen.

Da in einem Maschinenverband arbeitende Arbeitsmaschinen häufig nicht völlig identisch ausgebildet sind, berücksichtigt eine Steuereinheit der Arbeitsmaschine bei einer vorteilhaften Weiterbildung des erfindungsgemäßen Optimierungsverfahrens bei der Anzeige der Betriebsparameter und/oder der daraus resultierenden Arbeitsergebnisse und/oder bei einer Übernahme von Betriebsparametern unterschiedliche Ausbildungen der einzelnen Arbeitsmaschinen im Maschinenverband und normiert die Betriebsparameter und/oder die daraus resultierenden Arbeitsergebnisse entsprechend, so dass trotz unterschiedlicher Ausbildung der einzelnen Arbeitsmaschinen ein zuführende Vergleich der Betriebsparameter und/oder der daraus resultierenden Arbeitsergebnisse möglich ist.

Bei einer vorteilhaften Weiterbildung des erfindungsgemäßen Optimierungsverfahrens erfolgt die Anzeige der Betriebsparameter und/oder der daraus resultierenden Arbeitsergebnisse in einer Anzeigeeinheit der Arbeitsmaschine, so dass ohnehin auf der Arbeitsmaschine verfügbare Bauelemente für die Vergieichsanzeige genutzt werden können.

Um einen schnellen und sicheren Austausch der Betriebsparameter und/oder der daraus resultierenden Arbeitsergebnisse zu ermöglichen, sind die im Maschinenverband arbeitenden landwirtschaftlichen Arbeitsmaschinen mittels zumindest einen Datenübertragungssystems miteinander vernetzt.

Da sich die aktuell vorliegenden Arbeitsbedingungen aufgrund von beispielsweise Witterungseinflüssen und/oder der Feldkontur und/oder weiterer Randbedingungen ständig ändern, werden die angezeigten Betriebsparameter und/oder die daraus resultierenden Arbeitsergebnisse bei einer vorteilhaften Weiterbildung des erfindungsgemäßen Optimierungsverfahrens fortlaufend aktualisiert. Diese Aktualisierung kann beispielsweise alle paar Sekunden erfolgen, so dass der Bediener stets über die aktuellen Änderungen informiert ist und die Betriebsparameter seiner Arbeitsmaschine gegebenenfalls direkt den aktuell vorliegenden Arbeitsbedingungen anpassen kann.

Eine besonders einfache konstruktive Ausführung einer Vorrichtung zur Durchführung des erfindungsgemäßen Optimierungsverfahrens ergibt sich dann, wenn die landwirtschaftliche Arbeitsmaschine mittels zumindest einen Datenübertragungssystems mit zumindest einer weiteren mit der landwirtschaftlichen Arbeitsmaschine in einem Maschinenverband arbeitenden Arbeitsmaschine vernetzt ist und zumindest eine Anzeigeeinheit aufweist, in der neben den eigenen Betriebsparametern und/oder den daraus resultierenden Arbeitsergebnissen zusätzlich Betriebsparameter und/oder daraus resultierende Arbeitsergebnisse der zumindest einen weiteren Arbeitsmaschine anzeigbar sind. Somit wir eine Vorrichtung geschaffen, die dazu dient, Betriebsparameter und/oder daraus resultierende Arbeitsergebnisse miteinander vergleichen zu können, so dass das Erfahrungswissen von mehreren Bedienern in den Optimierungsprozess eingebunden wird. Unerfahrenen Bedienern dient es dazu, von dem Erfahrungswissen von erfahrenen Bedienern zu lernen, und auch bei erfahrenen Bedienern kann die Vergleichsanzeige dazu dienen, dass er sein Erfahrungswissen noch weiter ausbauen kann. Insgesamt dient die erfindungsgemäße Vorrichtung dazu, dass schnell, auf gesicherten Ergebnissen beruhende und den konkreten örtlichen und zeitlichen Erntebedingungen entsprechende Betriebsparameter generiert werden, die ein optimales Arbeitsergebnis der landwirtschaftlichen Arbeitsmaschine gewährleisten.

Unter einem Maschinenverband im Sinne der Anmeldung sind beispielsweise eine Mehrzahl von landwirtschaftlichen Arbeitsmaschinen zu verstehen, die unmittelbar an einem Ernteprozess beteiligt sind. Dies kann beispielsweise eine aus einer Erntemaschine und einer Anzahl von Transportfahrzeugen bestehende sogenannte Erntekette sein. Unter einem Maschinenverband sind beispielsweise aber auch mehrere gleichzeitig auf einem Feld arbeitende Erntemaschinen zu verstehen. Weiterhin könnten die landwirtschaftlichen Arbeitsmaschinen in dem Maschinenverband auch gleichzeitig auf einem Feld arbeitende Dünge-, Sä- und/oder Bodenbearbeitungsmaschinen sein. Die hier genannten landwirtschaftlichen Arbeitsmaschinen und deren Verwendung sind als beispielhafte Lösungen und nicht eingrenzend für eine Vielzahl von landwirtschaftlichen Arbeitsmaschinen und deren Verwendung in einem Maschenenverband zu sehen.

Damit der Bediener die Betriebsparameter und/oder die daraus resultierenden Arbeitsergebnisse schnell und intuitiv erfassen kann, sind diese bei einer vorteilhaften Weiterbildung der erfindungsgemäßen Vorrichtung in Zahlenform und/oder in Begriffsform und/oder in Form von Piktogrammen und/oder in Diagrammform und/oder in Form von Kamerabildem anzeigbar.

Bei einer vorteilhaften Weiterbildung der erfindungsgemäßen Vorrichtung sind dem Bediener der Arbeitsmaschine neben den eigenen Betriebsparametern und/oder den daraus resultierenden Arbeitsergebnissen und den Betriebsparametern und/oder den daraus resultierenden Arbeitsergebnissen der zumindest einen weiteren mit der landwirtschaftlichen Arbeitsmaschine in einem Maschinenverband arbeitenden landwirtschaftlichen Arbeitsmaschine weitere arbeitsmaschinenabhängige Kriterien anzeigbar. Dies können sowohl arbeitsmaschinenabhängige Kriterien der eigenen Arbeitsmaschine als auch einer anderen im Maschinenverband arbeitenden Arbeitsmaschine sein, so dass bei einem Vergleich der Betriebsparameter und/oder den daraus resultierenden Arbeitsergebnissen die arbeitsmaschinenabhängigen Kriterien mit berücksichtigt werden. Sind die landwirtschaftlichen Arbeitsmaschinen beispielsweise als Mähdrescher ausgebildet, so kann es vorkommen, dass sich ein Mähdrescher im Maschinenverband gerade in einem Abtankvorgang befindet, in dem er eine konstante Fahrgeschwindigkeit einhalten muss. Dies kann dazu führen, dass die eingestellten Betriebsparameter ein schlechteres Arbeitsergebnis erzeugen, als bei einem anderen im Maschinenverband arbeitenden Mähdrescher, dessen Fahrgeschwindigkeit mittels eines automatischen Vorfahrtreglers allein Erntegutdurchsatzabhängig gesteuert wird. Dadurch, dass dem Bediener somit anzeigbar ist, dass eine Arbeitsmaschine Geschtnrindigkeitsabhängig und eine andere Arbeitsmaschine Erntegutdurchsatzabhängig gesteuert wird, kann er bei einem Vergleich der angezeigten Betriebsparameter und/oder der daraus resultierenden Arbeitsergebnisse den Schluss ziehen, die Betriebsparameter und/oder die daraus resultierenden Arbeitsergebnisse des derzeit im Abtankvorgang befindlichen Arbeitsmaschine aktuell nicht zu berücksichtigen,

Um die Optimierung der Betriebsparameter vorteilhaft vom bloßen Erfahrungswissen der Bediener zu entkoppeln und die Vorrichtung zur Findung von optimalen Betriebsparametern noch weiter zu verbessern, weist die Arbeitsmaschine eine Steuereinheit auf, weiche in Abhängigkeit eines Vergleichs der Betriebsparameter und/oder der daraus resultierenden Arbeitsergebnisse Optimierungshinweise im Bezug auf die Betriebsparameter generiert, wobei diese in der Anzeigeeinheit anzeigbar sind. Vorteilhaft betreffen die angezeigten Optimierungshinweise die Betriebsparameter der Arbeitsmaschine des Bedieners und/oder die Betriebsparameter zumindest einer im Maschinenverband arbeitenden Arbeitsmaschine, so dass der Bediener ein klares Bild darüber erhält, weiche Betriebsparameter Optimierungsbedürftig sind, so dass sein Erfahrungswissen steigt. Der Bediener der Arbeitsmaschine kann beispielsweise die Optimierungshinweise an weitere im Maschinenverband arbeitende Arbeitsmaschinen übermitteln, so dass es beispielsweise ausreicht, wenn lediglich eine der Arbeitsmaschinen im Maschinenverband über die Steuereinheit zum Generieren der Optimierungshinweise verfügt.

Anhand der beigefügten Zeichnungen wird die Erfindung nachfolgend näher erläutert.

Es zeigen:
- Fig. 1:: eine landwirtschaftliche Arbeitsmaschine in Form einer schematischen Seiten- ansicht eines Mähdreschers,
- Fig. 2:: drei in einem Maschinenverband arbeitende Mähdrescher auf einem zu ern- tenden Feld,
- Fig. 3:: eine beispielhafte Ausgestaltung der vergleichenden Darstellung der Be- triebsparameter und der daraus resultierenden Arbeitsergebnisse und
- Fig. 4:: eine zweite beispielhafte Ausgestaltung der vergleichenden Darstellung der Betriebsparameter und der daraus resultierenden Arbeitsergebrtisse.

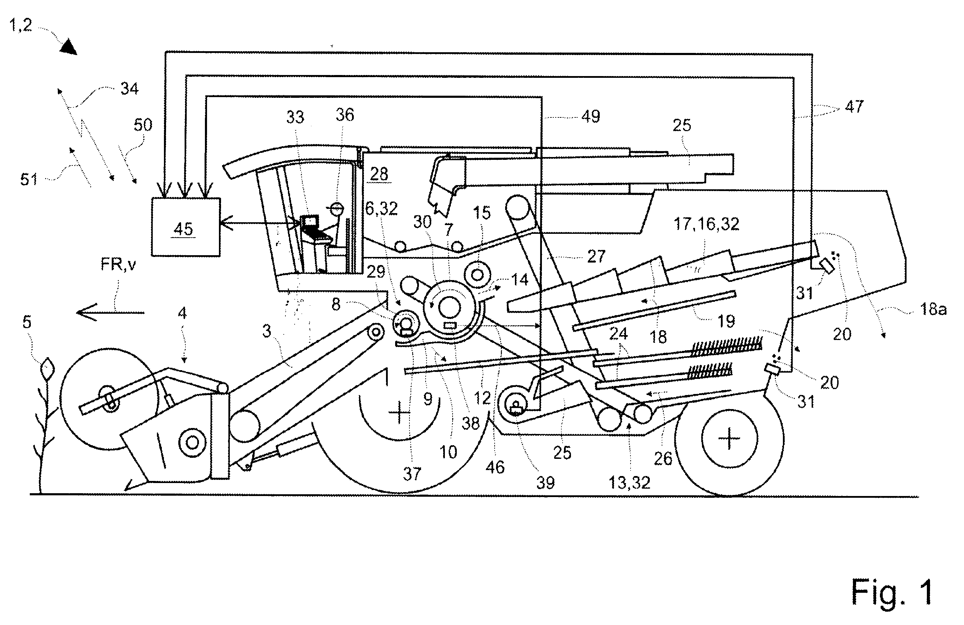

In den Figuren 1 - 4 ist das erfindungsgemäße Verfahren zur Optimierung von Betriebsparametern an einem landwirtschaftlichen Anwendungsfall näher erläutert. Es soll dabei ausdrücklich darauf hingewiesen werden, dass das erfindungsgemäße Verfahren nicht auf die Einstellung der hier genannten Arbeitsorgane und auch nicht auf Mähdrescher beschränkt ist, sondern vielmehr für landwirtschaftliche Arbeitsmaschinen mit einstellbaren Betriebsparametern anwendbar ist.

Figur 1 zeigt eine als Mähdrescher 2 ausgeführte landwirtschaftliche Arbeitsmaschine 1, die in ihrem in Fahrtrichtung FR weisenden frontseitigen Bereich ein an einem Schrägförderorgan 3 angeordnetes Schneidwerk 4 aufnimmt, weiches das gewachsene Erntegut 5 aberntet und zusammenführt. Über das Schrägförderorgan 3 gelangt das Erntegut 5 in an sich bekannter Weise in die Dreschorgane 6, die im Ausführungsbeispiel aus einer ersten Dreschtrommel 8 und einer dieser nachgeordneten zweiten Dreschtrommel 7 bestehen. Es liegt im Rahmen der Erfindung, dass die Dreschorgane 6 in an sich bekannter Weise als sogenannte Axial-Dresch- und Trennrotoren ausgebildet sein können. Im Bereich der Dreschorgane 6 wird am Dreschkorb 9 ein erster, im Wesentlichen aus Körner, Kurzstroh und Spreu bestehender Gutstrom 10 abgeschieden, der über einen Vorbereitungsboden 12 in die Reinigungseinrichtung 13 gelangt. Ein weiterer Gutstrom 14 wird im rückwärtigen Bereich der Dreschorgane 6 mittels einer Wendetrommel 15 an eine als Hordenschüttler 17 ausgeführte Trenneinrichtung 16 übergeben. Auf dem Hordenschüttler 17 wird ein weiterer im Wesentlichen aus Körnern, Stroh und Spreu bestehender Gutstrom 18 über einen Rücklaufboden 19 und den Vorbereitungsboden 12 ebenfalls an die Reinigungseinrichtung 13 übergeben. Zudem tritt am Ende des Hordenschüttlers 17 ein im Wesentlichen aus Stroh und zu einem geringen Anteil aus Körnern, dem sogenannten Kornverlust 20, bestehender Gutstrom 18a aus dem Mähdrescher 2 aus. Durch die Rotationsbewegung 29, 30 der Dreschtrommeln 8, 7 und der ihr nachgeordneten Wendetrommel 15 wird das Erntegut 5 entlang eines Dreschkorbes 9 in den rückwärtigen Bereich der Dreschorgane 6 gefordert. Dabei wird der Erntegutstrom 5 in verschiedene Gutströme 10, 14 aufgeteilt, wobei der durch den Dreschkorb 9 abgeschiedene Gutstrom 10 überwiegend von Körnern und der im rückwärtigen Bereich des Dreschorgans 6 austretende Gutstrom 14 überwiegend von Stroh gebildet wird. Nachdem die aus den Dreschorganen 6 austretenden Gutströme 10, 14 weitere Arbeitsorgane, wie etwa eine aus ein oder mehreren Siebebenen 24 und einem diesen Siebebenen 24 zugeordneten Gebläse 25 bestehende Reinigungseinrichtung 13 sowie eine als Hordenschüttler 17 ausgeführte Trenneinrichtung 16 durchlaufen haben, werden die nun im Wesentlichen von Beimengungen befreiten Körnerströme 26 über ein Förderorgan 27 einer auf dem Mähdrescher 2 angeordneten Speichereinrichtung 28 zugeführt.

Zur Vermittlung des Kornverlustes 20 sind der als Hordenschüttler 17 ausgeführten Trenneinrichtung 16 und der Reinigungseinrichtung 13 jeweils im rückwärtigen Bereich an sich bekannte Kornverlustsensoren 31 zugeordnet. Zudem sei an dieser Stelle darauf verwiesen, dass dem Mähdrescher 2 eine Vielzahl weiterer Sensoren wie etwa Drehzahlsensoren 37, 38, 39 zur Ermittlung der Drehzahl der die Dreschorgane 6 bildenden Dreschtrommeln 8,7 und zur Ermittlung der Drehzahl des Gebläses 25, zugeordnet sein können.

Im dargestellten Ausführungsbeispiel bilden die Dreschorgane 6, die Trenneinrichtung 16 sowie die Reinigungseinrichtung 13 zugleich die Arbeitsorgane 32 des Mähdreschers 2. Die jeweiligen Aktoren zur Einstellung des Mähdreschers 2 sind dem Fachmann hinreichend bekannt, so dass in Fig. 1 auf die Darstellung des jeweiligen Elements verzichtet werden kann. Zudem ist der Mähdrescher 2 mit einer Eingabe- und Anzeigeneinheit 33 ausgestattet und mittels eines an sich bekannten Datenübertragungssystems 34 wie beispielsweise das Internet, Funknetze, Mobiltelefone oder Speicherkarten mit hier nicht näher dargestellten weiteren landwirtschaftlichen Arbeitsmaschinen 1 vernetzt.

Bediener 36 derartiger landwirtschaftlicher Arbeitsmaschinen 1 sind bestrebt, den Kornverlust 20 möglichst gering zu halten. In bekannter Weise kann dazu ein Mähdrescher 2 neben Kornverlustsensoren 31 je nach Ausstattungsgrad mit weiteren Sensoren 37, 38, 39 bestückt sein, die im einfachsten Fall wie bereits erwähnt als Drehzahlsensoren 37, 38, 39 zur Ermittlung der Drehzahl des Gebläses 25 sowie der Dreschtrommel 8,7 ausgebildet sind. Weiter ist es auch bereits bekannt, sogenannte hier nicht näher beschriebene Durchsatzsensoren einzusetzen. Die von den verschiedenen Sensoren 31, 38, 39 generierten Signale 46, 47, 49 werden in einem auf dem Mähdrescher 2 angeordneten Bordrechner 45 beispielsweise in Dreschtrommeldrehzahlsignale 46, Kornverlustsignale 47 und Gebläsedrehzahlsignale 49 umgewandelt, die dann über eine Eingabe- und Anzeigeneinheit 33 dem Bediener 36 permanent oder auf Abruf angezeigt werden. Ferner ist es auch bekannt, anstelle der Kornverluste 20 mittels der Kornverlustsensoren 31 die Verluste einzelner Arbeitsorgane 32 wie etwa der Reinigungseinrichtung 13 oder der Trenneinrichtung 16 separat zu bestimmten. Zudem ist es aus dem Stand der Technik bekannt den Bruchkornanteil des nicht näher beschriebenen geernteten Körnerstromes zu ermitteln und dem Bediener 36 anzuzeigen. Der Bordrechner 45 kann mittels des Datenübertragungssystems 34 Informationen 50 empfangen oder Informationen 51 übermitteln. Bei bekannten Verfahren beschränkt sich die Optimierung einstellbarer Betriebsparameter darauf, dass der Bediener 36 einzelne Betriebsparameter der Arbeitsorgane 6,13,17 oder die Fahrgeschwindigkeit v ändert und an Hand der ermittelten Kornverluste 20 oder des Körnerbruchs deren Einfluss auf das Arbeitsergebnis der landwirtschaftlichen Arbeitsmaschine 1 abschätzt und bei nicht zufriedenstellenden Ergebnissen, die einstellbare Betriebsparameter solange ändert, bis ein akzeptables Arbeitsergebnis des Mähdreschers 2 erreicht wird. Hier setzt nun das erfindungsgemäße Verfahren zur Optimierung der Betriebsparameter ein.

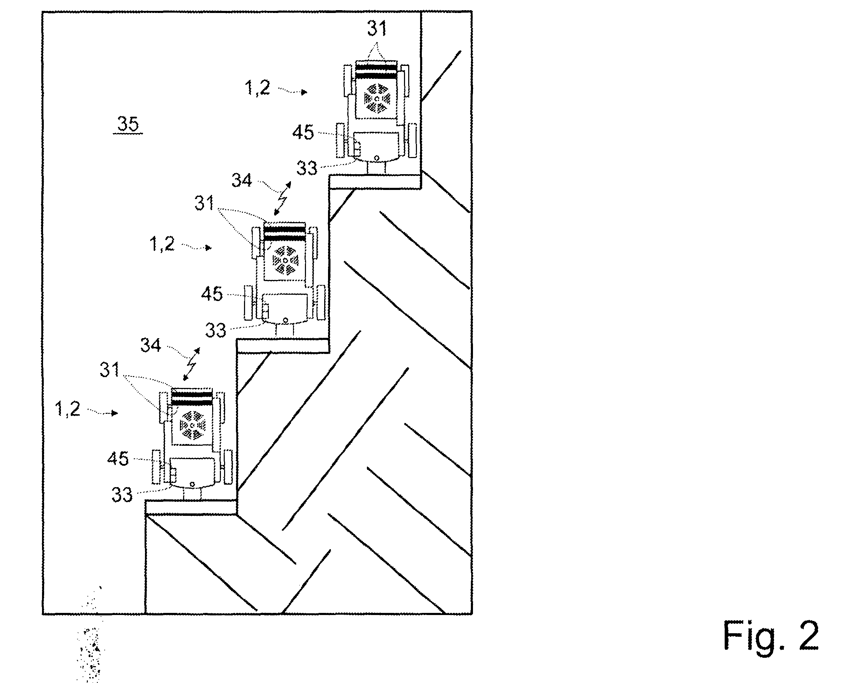

In Fig. 2 sind beispielhaft drei, mit an sich bekannten Kornverlustsensoren 31 ausgestattete landwirtschaftliche Arbeitsmaschinen 1 in Form von Mähdreschern 2 bei der Erntefahrt auf dem Erntefeld 35 in einem Maschinenverband. Die einzelnen landwirtschaftlichen Arbeitsmaschinen 1 sind mittels eines Datenübertradungssystems 34, wie beispielsweise das Internet oder Funk, miteinander vernetzt. Gleichfalls verfügen die vernetzen landwirtschaftlichen Arbeitsmaschinen 1 für den Optimierungsprozess über einen Bordrechner 45 und eine angeschlossene Anzeigeeinheit 33. Den Bedienern der einzelnen Mähdreschern 2 wird in der Anzeigeeinheit 33 erfindungsgemäß jeweils neben den Betriebsparametern und/oder den daraus resultierenden Arbeitsergebnissen des eigenen Mähdreschers zusätzlich die Betriebsparameter und/oder die daraus resultierenden Arbeitsergebnisse der beiden anderen im Maschinenverband arbeitenden Mähdrescher 2 angezeigt. Somit hat jeder Bediener die Möglichkeit, die Betriebsparameter und/oder die daraus resultierenden Arbeitsergebnisse miteinander zu vergleichen und gegebenenfalls die Betriebsparameter seines Mähdreschers anzupassen, um ein besseres Arbeitsergebnis zu erzielen.

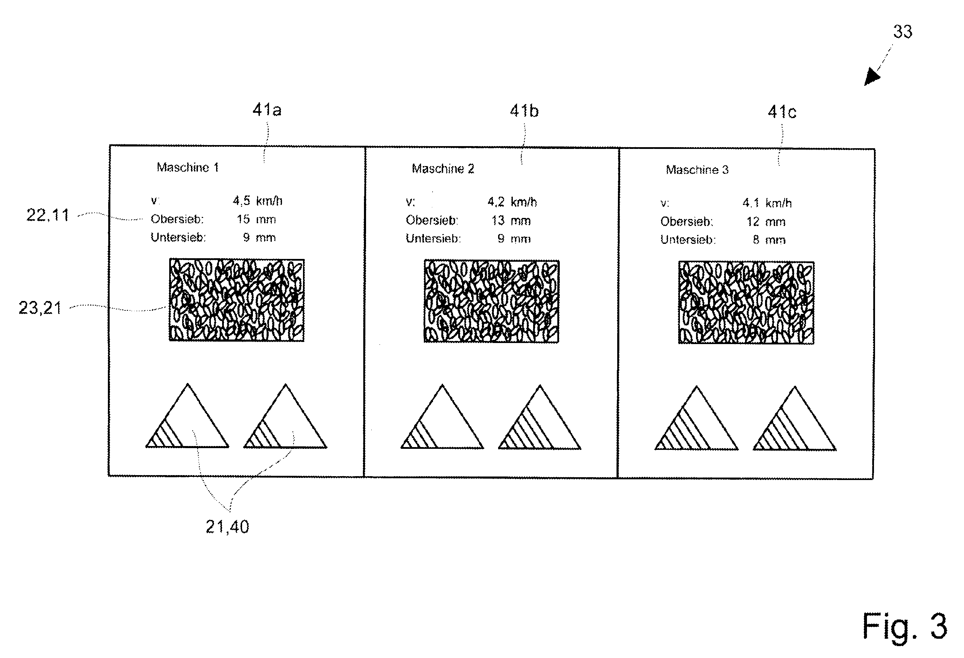

In Fig. 3 ist eine beispielhafte Ausgestaltung der vergleichenden Darstellung der Betriebsparameter 11 und der daraus resultierenden Arbeitsergebnisse 21 in der Anzeigeeinheit 33 dargestellt. Seitens des Bedieners wurde aus einer Vielzahl von darstellbaren Betriebsparametern 11 und Arbeitsergebnissen 21 ausgewählt, dass er die Fahrgeschwindigkeit, die Lammellenöffnungsweite der Obersiebe der Reinigungseinrichtung, die Lamellenöffnungsweite der Untersiebe der Reinigungseinrichtung, die Reinheit des der Speichereinrichtung zugeführten Körnerstroms, das Verlustniveau der Reinigungseinrichtung sowie das Verlustniveau der Trenneinrichtung in der Anzeigeeinheit 33 angezeigt haben möchte. Hierzu ist die Anzeigeeinheit 33 in drei Blöcke 41a, 41b, 41c unterteilt, in denen die ausgewählten Betriebsparameter 91 und Arbeitsergebnisse 21 der drei im Maschinenverband arbeitenden Mähdrescher dargestellt werden. Die Fahrgeschwindigkeit, die Lammelletiöffnungsweite der Obersiebe der Reinigungseinrichtung und die Lamellenöffnungsweite der Untersiebe der Reinigungseinrichtung werden als Zahlenwert 22 mit entsprechender Einheit dargestellt. Um die Reinheit des der Speichereinrichtung zugeführten Körnerstroms vergleichbar zu machen, ist ein Kamerabild 23 in der Anzeigeeinheit 33 dargestellt, welches beispielsweise in dem Förderorgan mittels einer entsprechend ausgebildeten Kamera generiert wird. Um das Verlustniveau der Reinigungseinrichtung sowie das Verlustniveau der Trenneinrichtung für den Bediener schnell und intuitiv erfaßbar darzustellen, ist dieses jeweils als Diagramm 40 in Form eines Dreiecks für die drei Mähdrescher dargestellt. Aus dem Vergleich der dargestellten Betriebsparameter 11 und der Arbeitsergebnisse 21 erhält der Bediener unmittelbar eine Information, welcher der drei Mähdrescher das beste Arbeitsergebnis 21 mittels der entsprechenden Betriebsparameter 11 erzielt, so dass er diese oder weitere Betriebsparameter 11 übernehmen kann, so dass sich sein Arbeitsergebnis 21 ebenfalls verbessert.

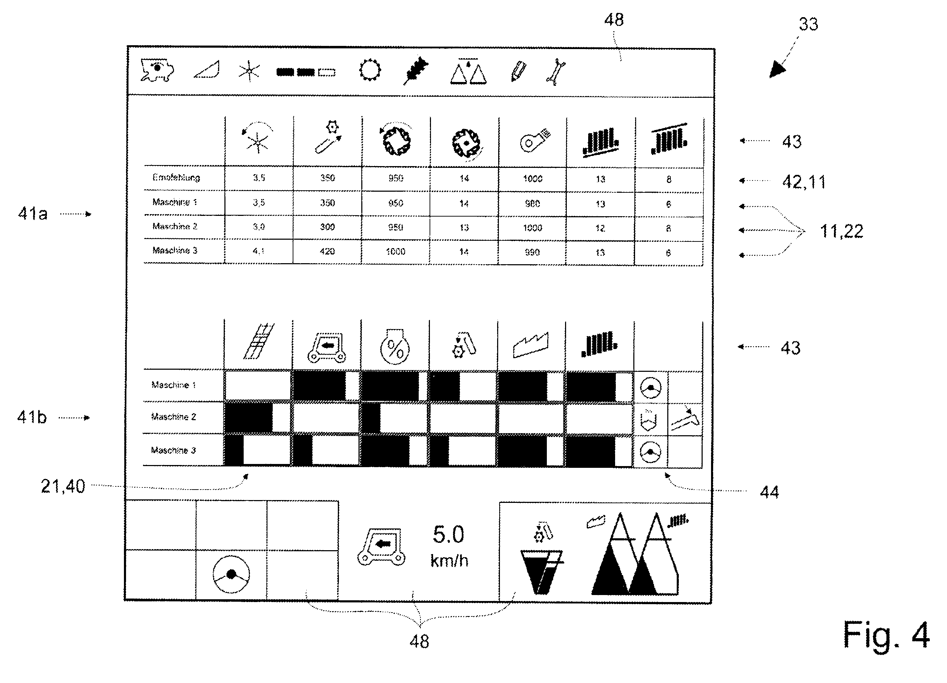

In Fig. 4 ist eine zweite beispielhafte Ausgestaltung der vergleichenden Darstellung der Betriebsparameter 11 und der daraus resultierenden Arbeitsergebnisse 21 in der Anzeigeeinheit 33 dargestellt. Die Anzeigeeinheit 33 ist im Wesentlichen in zwei Blöcke 41a, 41b unterteilt. In dem oberen Block 41a sind in tabellarischer Form einzelne Betriebsparameter 11 der drei im Maschinenverband arbeitenden Mähdrescher, sowie eine seitens des Mähdrescherherstellers eingepflegte Empfehlung 42 für die Betriebsparameter 11 angegeben. Die Betriebsparameter 11 sind jeweils als Zahlenwert 22 für die unterschiedlichen Arbeitsorgane angegeben, welche zum einfachen Verständnis als Piktogramm 43 dargestellt sind. Diese Arbeitsorgane und die zugehörigen Betriebsparameter 11 sind hier beispielhaft ein von der Fahrgeschwindigkeit abhängiger Faktor für die Haspeldrehzahl des Schneidwerkes, die Drehzahl der Einzugsschnecke, die Drehzahl der Dreschtrommel, das Maß des Dreschspaltes, die Drehzahl des Reinigungsgebläses, die Lameitenörfnungsweite des Obersiebes und die Lame!lenöfifnungsweite des Untersiebes der Reinigungseinrichtung.

Im unteren Block 41b sind ebenfalls in tabellarischer Form einzelne Arbeitsergebnisse 21 der drei im Maschinenverband arbeitenden Mähdrescher angegeben. Die Arbeitsergebnisse 21 sind jeweils als Balken-Diagramm 40 für die unterschiedlichen Arbeitsorgane angegeben, welche zum einfachen Verständnis als Piktogramm 43 dargestellt sind. Diese Arbeitsorgane und die zugehörigen Arbeitsergebnisse sind hier beispielhaft, die Signalgüte einer Satellitensignalempfangseinheit, die Fahrgeschwindigkeit des Mähdreschers, die Auslastung des Antriebsmotors, die Überkehrmenge, das Verlustniveau der Trenneinrichtung und das Verlustniveau der Reinigungseinrichtung. Zusätzlich werden zu jeder Arbeitsmaschine arbeitsmaschinenabhängige Kriterien 44 angezeigt. Dies dient dazu, dass der Bediener bei einem Vergleich der Arbeitsergebnisse 21 diese Kriterien 44 mit berücksichtigen kann. In dem dargestellten Beispiel befindet sich der Mähdrescher 2 gerade im Abtankprozess und steht auf dem Erntefeld neben einem entsprechenden Transportfahrzeug für das Erntegut, wohingegen die Fahrgeschwindigkeit der Mähdrescher 1 und 3 jeweils erntegutmengenabhängig mittels eines Vorfahrtreglers gesteuert wird. Somit erhält der Bediener die Information, dass er die Arbeitsergebnisse 21 des Mähdreschers 2 derzeit bei einem Vergleich nicht berücksichtigen darf, da dieser unterschiedlich zu den beiden anderen Mähdreschern betrieben wird. Aus dem Vergleich der dargestellten Betriebsparameter 11 und der Arbeitsergebnisse 21 erhält der Bediener unmittelbar eine Information, welcher der Mähdrescher das beste Arbeitsergebnis 21 mittels der entsprechenden Betriebsparameter 11 erzielt, so dass er diese oder weitere Betriebsparameter 11 übernehmen kann, so dass sich sein Arbeitsergebnis 21 ebenfalls verbessert. Die Anzeigeeinheit 33 weist zusätzlich weitere Anzeigefelder 48 auf, die ausschließlich die Bedienung, einzelne Betriebsparameter und einzelne Arbeitsergebnisse der eigenen Arbeitsmaschine betreffen, und nicht zu dem erfindungsgemäßen Vergleich benötigt werden.

### Bezugszeichenliste*.

| | | | |
|---|---|---|---|
| 1 | landwirtschaftliche Arbeitsmaschine | 30 | Rotationsbewegung |
| 2 | Mähdrescher | 31 | Kornverlustsensor |
| 3 | Schrägförderer | 32 | Arbeitsorgane |
| 4 | Schneidwerk | 33 | Anzeigeeinheit |
| 5 | Erntegut | 34 | Datenübertragungssystem |
| 6 | Dreschorgane | 35 | Erntefeld |
| 7 | Dreschtrommel | 36 | Bediener |
| 8 | Dreschtrommel | 37 | Drehzahlsensor |
| 9 | Dreskorb | 38 | Drehzahlsensor |
| 10 | Gutstrom | 39 | Drehzahlsensor |
| 11 | Betriebsparameter | 40 | Diagramm |
| 12 | Vorbereitungsboden | 41a,41b,41c | Block |
| 13 | Reinigungseinrichtung | 42 | Empfehlung |
| 14 | Gutstrom | 43 | Piktogramm |
| 15 | Wendetrommel | 44 | Kriterium |
| 16 | Trenneinrichtung | 45 | Bordrechner |
| 17 | Hordenschüttler | 46 | Dreschtrommeldrehzahlsignal |
| 18,18a | Gutstrom | 47 | Kornverlustsignal |
| 19 | Rücklaufboden | 48 | Anzeigefeld |
| 20 | Kornverlust | 49 | Gebläsedrehzahlsignal |
| 21 | Arbeitsergebnis | 50 | Informationen |
| 22 | Zahlenwert | 51 | Informationen |
| 23 | Kamerabild | FR | Fahrtrichtung |
| 24 | Siebebenen | v | Fahrgeschwindigkeit |
| 25 | Gebläse | | |
| 26 | Körnerstrom | | |
| 27 | Förderorgan | | |
| 28 | Speichereinrichtung | | |
| 29 | Rotationsbewegung | | |

## Patentansprüche

1. Verfahren zur Optimierung von Betriebsparametern (11) einer landwirtschaftlichen Arbeitsmaschine (1), bei welchem dem Bediener (36) der Arbeitsmaschine (1) neben den eigenen Betriebsparametern (11) und/oder den daraus resultierenden Arbeitsergebnissen (21) zusätzlich Betriebsparameter (11) und/oder daraus resultierende Arbeitsergebnisse (21) zumindest einer weiteren mit der landwirtschaftlichen Arbeitsmaschine (1) in einem Maschinenverband arbeitenden landwirtschaftlichen Arbeitsmaschine (1) angezeigt werden,
**dadurch gekennzeichnet,**
**dass** der Bediener (36) aus einer Mehrzahl von anzeigbaren Betriebsparametern (11) und/oder daraus resultierenden Arbeitsergebnissen (21) einzelne Betriebsparameter (11) und/oder daraus resultierende Arbeitsergebnisse (21) zur Anzeige auswählen kann, und dass die ausgewählten Betriebsparameter (11) und/oder daraus resultierenden Arbeitsergebnissen (21) der Arbeitsmaschine (1) und der zumindest einen weiteren landwirtschaftlichen Arbeitsmaschine (1) miteinander verglichen und angepasst werden, um ein besseres Arbeitsergebnis der Arbeitsmaschine zu erzielen.

2. Verfahren zur Optimierung von Betriebsparametern (11) einer landwirtschaftlichen Arbeitsmaschine (1) nach einem der vorstehenden Ansprüche, **dadurch gekennzeichnet, dass** dem Bediener (36) der Arbeitsmaschine (1) neben den eigenen Betriebsparametern (11) und/oder den daraus resultierenden Arbeitsergebnissen (21) und den Betriebsparametern (11) und/oder den daraus resultierenden Arbeitsergebnissen (21) der zumindest einen weiteren mit der landwirtschaftlichen Arbeitsmaschine (1) in einem Maschinenverband arbeitenden landwirtschaftlichen Arbeitsmaschine (1) weitere arbeitsmaschinenabhängige Kriterien (44) angezeigt werden.

3. Verfahren zur Optimierung von Betriebsparametern (11) einer landwirtschaftlichen Arbeitsmaschine (1) nach einem der vorstehenden Ansprüche, **dadurch gekennzeichnet, dass** dem Bediener (36) in Abhängigkeit eines Vergleichs der Betriebsparameter (11) und/oder der daraus resultierenden Arbeitsergebnisse (21) mittels einer Steuereinheit generierte Optimierungshinweise im Bezug auf die Betriebsparameter (11) angezeigt werden.

4. Verfahren zur Optimierung von Betriebsparametern (11) einer landwirtschaftlichen Arbeitsmaschine (1) nach Anspruch 3, **dadurch gekennzeichnet, dass** die angezeigten Optimierungshinweise die Betriebsparameter (11) der Arbeitsmaschine (1) und/oder die Betriebsparameter (11) zumindest einer im Maschinenverband arbeitenden Arbeitsmaschine (1) betreffen.

5. Verfahren zur Optimierung von Betriebsparametern (11) einer landwirtschaftlichen Arbeitsmaschine (1) nach einem der Ansprüche 3 bis 4, **dadurch gekennzeichnet, dass** der Bediener (36) der Arbeitsmaschine (1) die Optimierungshinweise an weitere im Maschinenverband arbeitende Arbeitsmaschinen (1) übermitteln kann.

6. Verfahren zur Optimierung von Betriebsparametern (11) einer landwirtschaftlichen Arbeitsmaschine (1) nach einem der vorstehenden Ansprüche, **dadurch gekennzeichnet, dass** eine Steuereinheit der Arbeitsmaschine (1) in Abhängigkeit eines Vergleichs der Betriebsparameter (11) und/oder der daraus resultierenden Arbeitsergebnisse (21) selbsttätig einzelne Betriebsparameter (11) übernimmt, die bei einer im Maschinenverband arbeitenden Arbeitsmaschine (1) ein besseres Arbeitsergebnis (21) erzielt haben.

7. Verfahren zur Optimierung von Betriebsparametern (11) einer landwirtschaftlichen Arbeitsmaschine (1) nach Anspruch 6, **dadurch gekennzeichnet, dass** der Bediener (36) aus einer Mehrzahl von Betriebsparametern (11) einzelne Betriebsparameter (11) zur selbsttätigen Übernahme seitens der Steuereinheit auswählen kann.

8. Verfahren zur Optimierung von Betriebsparametern (11) einer landwirtschaftlichen Arbeitsmaschine (1) nach einem der Ansprüche 6 bis 7, **dadurch gekennzeichnet, dass** die Steuereinheit bei dem Vergleich der Betriebsparameter (11) und/oder der daraus resultierenden Arbeitsergebnisse (21) und/oder der selbsttätigen Übernahme einzelner Betriebsparameter (11) weitere arbeitsmaschinenabhängige Kriterien (44) berücksichtigt.

9. Verfahren zur Optimierung von Betriebsparametern (11) einer landwirtschaftlichen Arbeitsmaschine (1) nach einem der vorstehenden Ansprüche, **dadurch gekennzeichnet, dass** eine Steuereinheit der Arbeitsmaschine (1) bei der Anzeige der Betriebsparameter (11) und/oder der daraus resultierenden Arbeitsergebnisse (21) und/oder bei einer Übernahme von Betriebsparametern (21) unterschiedliche Ausbildungen der einzelnen Arbeitsmaschinen (1) im Maschinenverband berücksichtigt, und die Betriebsparameter (11) und/oder die daraus resultierenden Arbeitsergebnisse (21) entsprechend normiert.

10. Verfahren zur Optimierung von Betriebsparametern (11) einer landwirtschaftlichen Arbeitsmaschine (1) nach einem der vorstehenden Ansprüche, **dadurch gekennzeichnet, dass** die Anzeige der Betriebsparameter (11) und/oder der daraus resultierenden Arbeitsergebnisse (21) in einer Anzeigeeinheit (33) der Arbeitsmaschine (1) erfolgt.

11. Verfahren zur Optimierung von Betriebsparametern (11) einer landwirtschaftlichen Arbeitsniaschine (1) nach einem der vorstehenden Ansprüche, **dadurch gekennzeichnet, dass** die im Maschinenverband arbeiteten landwirtschaftlichen Arbeitsmaschinen (1) mittels zumindest einen Datenübertragungssystems (34) miteinander vernetzt sind.

12. Verfahren zur Optimierung von Betriebsparametern (11) einer landwirtschaftlichen Arbeitsmaschine (1) nach einem der vorstehenden Ansprüche, **dadurch gekennzeichnet, dass** die angezeigten Betriebsparameter (11) und/oder die daraus resultierenden Arbeitsergebnisse (21) fortlaufend aktualisiert werden.

13. Vorrichtung zur Optimierung von Betriebsparametern (11) einer landwirtschaftlichen Arbeitsmaschine (1), die mittels zumindest einen Datenübertragungssystems (34) mit zumindest einer weiteren mit der landwirtschaftlichen Arbeitsmaschine (1) in einem Maschinenverband arbeitenden Arbeitsmaschine (1) vernetzt ist und zumindest eine Anzeigeeinheit (33) aufweist, in der neben den eigenen Betriebsparametern (11) und/oder den daraus resultierenden Arbeitsergebnissen (21) zusätzlich Betriebsparameter (11) und/oder daraus resultierende Arbeitsergebnisse (21) der zumindest einen weiteren Arbeitsmaschine (1) anzeigbar sind,
**dadurch gekennzeichnet, dass** die landwirtschaftliche Arbeitsmaschine (1) zur Durchführung eines Verfahrens gemäß der Ansprüche 1 bis 12 geeignet ist.

14. Vorrichtung zur Optimierung von Betriebsparametern (11) einer landwirtschaftlichen Arbeitsmaschine (1) nach Anspruch 13 **dadurch gekennzeichnet, dass** die Betriebsparameter (11) und/oder die daraus resultierenden Arbeitsergebnisse (21) in Zahlenform (22) und/oder in Begriffsform und/oder in Form von Piktogrammen (43) und/oder in Diagrammform (40) und/oder in Form von Kamerabildern (23) anzeigbar sind.

15. Vorrichtung zur Optimierung von Betriebsparametern (11) einer landwirtschaftlichen Arbeitsmaschine (1) nach einem der Ansprüche 13 bis 14 **dadurch gekennzeichnet, dass** neben den Betriebsparametern (11) und/oder den daraus resultierenden Arbeitsergebnissen (21) weitere arbeitsmaschinenabhängige Kriterien (44) anzeigbar sind.

16. Vorrichtung zur Optimierung von Betriebsparametern (11) einer landwirtschaftlichen Arbeitsmaschine (1) nach einem der Ansprüche 13 bis 15 **dadurch gekennzeichnet, dass** die Arbeitsmaschine (1) eine Steuereinheit aufweist, welche in Abhängigkeit eines Vergleichs der Betriebsparameter (11) und/oder der daraus resultierenden Arbeitsergebnisse (21) Optimierungshinweise im Bezug auf die Betriebsparameter (11) generiert, wobei diese in der Anzeigeeinheit (33) anzeigbar sind.

## Claims

1. A method of optimising operating parameters (11) of an agricultural working machine (1), in which besides the machine-specific operating parameters (11) and/or the working results (21) resulting therefrom there are additionally displayed to the operator (36) of the working machine (1) operating parameters (11) and/or working results (21) resulting therefrom of at least one further agricultural working machine (1) working with the agricultural working machine (1) in a machine assembly,
**characterised in that**
the operator (36) can select individual operating parameters (11) and/or working results (21) resulting therefrom for display out of a plurality of displayable operating parameters (11) and/or working results (21) resulting therefrom and the selected operating parameters (11) and/or working results (21) resulting therefrom of the working machine (1) and the at least one further agricultural working machine (1) are compared to each other and adapted to achieve a better working result for the working machine.

2. A method of optimising operating parameters (11) of an agricultural working machine (1) according to claim 1 **characterised in that** besides the machine-specific operating parameters (11) and/or the working results (21) resulting therefrom and the operating parameters (11) and/or the working results (21) resulting therefrom of the at least one further agricultural working machine (1) working with the agricultural working machine (1) in a machine assembly further working machine-dependent criteria (44) are displayed to the operator (36) of the working machine (1).

3. A method of optimising operating parameters (11) of an agricultural working machine (1) according to one of the preceding claims **characterised in that** optimisation indications generated by means of a control unit in relation to the operating parameters (11) are displayed to the operator (36) in dependence on a comparison of the operating parameters (11) and/or the working results (21) resulting therefrom.

4. A method of optimising operating parameters (11) of an agricultural working machine (1) according to claim 3 **characterised in that** the displayed optimisation indications concern the operating parameters (11) of the working machine (1) and/or the operating parameters (11) of at least one working machine (1) working in the machine assembly.

5. A method of optimising operating parameters (11) of an agricultural working machine (1) according to one of claims 3 to 4 **characterised in that** the operator (36) of the working machine (1) can communicate the optimisation indications to further working machines (1) working in the machine assembly.

6. A method of optimising operating parameters (11) of an agricultural working machine (1) according to one of the preceding claims **characterised in that** in dependence on a comparison of the operating parameters (11) and/or the working results (21) resulting therefrom a control unit of the working machine (1) automatically adopts individual operating parameters (11) which in the case of a working machine (1) working in the machine assembly have achieved a better working result (21).

7. A method of optimising operating parameters (11) of an agricultural working machine (1) according to claim 6 **characterised in that** the operator (36) can select individual operating parameters (11) for automatically taking over on the part of the control unit from a plurality of operating parameters (11).

8. A method of optimising operating parameters (11) of an agricultural working machine (1) according to one of claims 6 and 7 **characterised in that** upon a comparison of the operating parameters (11) and/or the working results (21) resulting therefrom and/or the automatic adoption of individual operating parameters (11) the control unit takes account of further working machine-dependent criteria (44).

9. A method of optimising operating parameters (11) of an agricultural working machine (1) according to one of the preceding claims **characterised in that** upon the display of the operating parameters (11) and/or the working results (21) resulting therefrom and/or upon an adoption of operating parameters (21) a control unit of the working machine (1) takes account of different configurations of the individual working machines (1) in the machine assembly and suitably standardises the operating parameters (11) and/or the working results (21) resulting therefrom.

10. A method of optimising operating parameters (11) of an agricultural working machine (1) according to one of the preceding claims **characterised in that** display of the operating parameters (11) and/or the working results (21) resulting therefrom is effected in a display unit (33) of the working machine (1).

11. A method of optimising operating parameters (11) of an agricultural working machine (1) according to one of the preceding claims **characterised in that** the agricultural working machines (1) working in the machine assembly are networked together by means of at least one data transmission system (34).

12. A method of optimising operating parameters (11) of an agricultural working machine (1) according to one of the preceding claims **characterised in that** the displayed operating parameters (11) and/or the working results (21) resulting therefrom are continuously updated.

13. Apparatus for optimising operating parameters (11) of an agricultural working machine (1) which is networked by means of at least one data transmission system (34) with at least one further working machine (1) working with the agricultural working machine (1) in a machine assembly and has at least one display unit (33) in which, besides the machine-specific operating parameters (11) and/or the working results (21) resulting therefrom operating parameters (11) and/or working results (21) resulting therefrom of the at least one further working machine (1) can additionally be displayed,
**characterised in that** the agricultural working machine (1) is suitable for carrying out a method according to claims 1 to 12.

14. Apparatus for optimising operating parameters (11) of an agricultural working machine (1) according to claim 13 **characterised in that** the operating parameters (11) and/or the working results (21) resulting therefrom can be displayed in numerical form (22) and/or in conceptual form and/or in the form of pictograms (43) and/or in diagram form (40) and/or in the form of camera images (23).

15. Apparatus for optimising operating parameters (11) of an agricultural working machine (1) according to one of claims 13 to 14 **characterised in that** besides the operating parameters (11) and the working results (21) resulting therefrom further working machine-dependent criteria (44) can be displayed.

16. Apparatus for optimising operating parameters (11) of an agricultural working machine (1) according to one of claims 13 to 15 **characterised in that** the working machine (1) has a control unit which in dependence on a comparison of the operating parameters (11) and/or the working results (21) resulting therefrom generates optimisation indications in relation to the operating parameters (11), wherein they can be displayed in the display unit (33).

## Revendications

1. Procédé pour optimiser des paramètres de fonctionnement (11) d'une machine de travail agricole (1), dans lequel, en plus de ses propres paramètres de fonctionnement (11) et/ou des résultats de travail résultants (21), des paramètres de fonctionnement (11) et/ou des résultats de travail résultants (21) d'au moins une autre machine de travail agricole (1), travaillant dans un groupe de machines avec la machine de travail agricole (1), sont indiqués à l'opérateur (36) de la machine de travail (1), **caractérisé en ce que** l'opérateur (36) peut sélectionner, pour les afficher, des paramètres de fonctionnement (11) et/ou des résultats de travail résultants (21) parmi une pluralité de paramètres de fonctionnement (11) et/ou de résultats de travail résultants (21) affichables, et **en ce que** les paramètres de fonctionnement (11) et/ou les résultats de travail résultants (21) sélectionnés de la machine de travail (1) et de ladite au moins une autre machine de travail agricole (1) sont comparés entre eux et adaptés pour atteindre un meilleur résultat de travail de la machine de travail.

2. Procédé pour optimiser des paramètres de fonctionnement (11) d'une machine de travail agricole (1) selon une des revendications précédentes, **caractérisé en ce que**, en plus de ses propres paramètres de fonctionnement (11) et/ou des résultats de travail résultants (21) et des paramètres de fonctionnement (11) et/ou des résultats de travail résultants (21) de ladite au moins une autre machine de travail agricole (1) travaillant dans un groupe de machines avec la machine de travail agricole (1), d'autres critères (44) dépendants de la machine de travail sont indiqués à l'opérateur (36) de la machine de travail (1).

3. Procédé pour optimiser des paramètres de fonctionnement (11) d'une machine de travail agricole (1) selon une des revendications précédentes, **caractérisé en ce que** des indications d'optimisation relatives aux paramètres de fonctionnement (11), générées au moyen d'une unité de commande, sont indiquées à l'opérateur (36) en fonction d'une comparaison des paramètres de fonctionnement (11) et/ou des résultats de travail résultants (21).

4. Procédé pour optimiser des paramètres de fonctionnement (11) d'une machine de travail agricole (1) selon la revendication 3, **caractérisé en ce que** les indications d'optimisation affichées concernent les paramètres de fonctionnement (11) de la machine de travail (1) et/ou les paramètres de fonctionnement (11) d'au moins une machine de travail (1) travaillant dans le groupe de machines.

5. Procédé pour optimiser des paramètres de fonctionnement (11) d'une machine de travail agricole (1) selon une des revendications 3 à 4, **caractérisé en ce que** l'opérateur (36) de la machine de travail (1) peut transmettre les indications d'optimisation à d'autres machines de travail (1) travaillant dans le groupe de machines.

6. Procédé pour optimiser des paramètres de fonctionnement (11) d'une machine de travail agricole (1) selon une des revendications précédentes, **caractérisé en ce qu'**une unité de commande de la machine de travail (1) adopte automatiquement, en fonction d'une comparaison des paramètres de fonctionnement (11) et/ou des résultats de travail résultants (21), certains paramètres de fonctionnement (11) qui ont permis d'obtenir un meilleur résultat de travail (21) sur une machine de travail (1) travaillant dans le groupe de machines.

7. Procédé pour optimiser des paramètres de fonctionnement (11) d'une machine de travail agricole (1) selon la revendication 6, **caractérisé en ce que** l'opérateur (36) peut sélectionner parmi une pluralité de paramètres de fonctionnement (11) certains paramètres de fonctionnement (11) destinés à être adoptés automatiquement par l'unité de commande.

8. Procédé pour optimiser des paramètres de fonctionnement (11) d'une machine de travail agricole (1) selon une des revendications 6 à 7, **caractérisé en ce que** l'unité de commande tient compte d'autres critères (44) dépendants de la machine de travail pour la comparaison des paramètres de fonctionnement (11) et/ou des résultats de travail résultants (21) et/ou pour l'adoption automatique de certains paramètres de fonctionnement (11).

9. Procédé pour optimiser des paramètres de fonctionnement (11) d'une machine de travail agricole (1) selon une des revendications précédentes, **caractérisé en ce qu'**une unité de commande de la machine de travail (1) tient compte de différentes configurations des différentes machines de travail (1) dans le groupe de machines pour l'affichage des paramètres de fonctionnement (11) et/ou des résultats de travail résultants (21) et/ou pour une adoption de paramètres de fonctionnement (21), et normalise en conséquence les paramètres de fonctionnement (11) et/ou les résultats de travail résultants (21).

10. Procédé pour optimiser des paramètres de fonctionnement (11) d'une machine de travail agricole (1) selon une des revendications précédentes, **caractérisé en ce que** l'affichage des paramètres de fonctionnement (11) et/ou des résultats de travail résultants (21) s'effectue sur une unité d'affichage (33) de la machine de travail (1).

11. Procédé pour optimiser des paramètres de fonctionnement (11) d'une machine de travail agricole (1) selon une des revendications précédentes, **caractérisé en ce que** les machines de travail (1) qui travaillent dans le groupe de machines sont interconnectées au moyen d'au moins un système de transmission de données (34).

12. Procédé pour optimiser des paramètres de fonctionnement (11) d'une machine de travail agricole (1) selon une des revendications précédentes, **caractérisé en ce que** l'affichage des paramètres de fonctionnement (11) et/ou des résultats de travail résultants (21) est actualisé en permanence.

13. Dispositif pour optimiser des paramètres de fonctionnement (11) d'une machine de travail agricole (1) qui est interconnectée au moyen d'au moins un système de transmission de données (34) avec au moins une autre machine de travail (1) travaillant dans un groupe de machines avec la machine de travail agricole (1) et qui présente au moins une unité d'affichage (33) sur laquelle, en plus de ses propres paramètres de fonctionnement (11) et/ou des résultats de travail résultants (21), des paramètres de fonctionnement (11) et/ou des résultats de travail résultants (21) de ladite au moins une autre machine de travail (1) peuvent être affichés, **caractérisé en ce que** la machine de travail agricole (1) est conçue pour réaliser un procédé selon les revendications 1 à 12.

14. Dispositif pour optimiser des paramètres de fonctionnement (11) d'une machine de travail agricole (1) selon la revendication 13, **caractérisé en ce que** les paramètres de fonctionnement (11) et/ou les résultats de travail résultants (21) peuvent être affichés sous la forme de chiffres (22) et/ou sous la forme de mots et/ou sous la forme de pictogrammes (43) et/ou de diagrammes (40) et/ou d'images de caméra (23).

15. Dispositif pour optimiser des paramètres de fonctionnement (11) d'une machine de travail agricole (1) selon une des revendications 13 à 14, **caractérisé en ce que**, en plus des paramètres de fonctionnement (11) et/ou des résultats de travail résultants (21), d'autres critères (44) dépendants de la machine de travail sont affichables.

16. Dispositif pour optimiser des paramètres de fonctionnement (11) d'une machine de travail agricole (1) selon une des revendications 13 à 15, **caractérisé en ce que** la machine de travail (1) présente une unité de commande qui génère, en fonction d'une comparaison des paramètres de fonctionnement (11) et/ou des résultats de travail résultants (21), des indications d'optimisation relatives aux paramètres de fonctionnement (11), lesquelles peuvent être affichées sur l'unité d'affichage (33).
